# EUROPÄISCHE PATENTSCHRIFT

(11) **EP 0 664 531 B1**
(45) Veröffentlichungstag und Bekanntmachung des Hinweises auf die Patenterteilung: **01.03.2000**
(21) Anmeldenummer: 95100283.1
(22) Anmeldetag: 11.01.1995
(51) Int. Cl.: G08B 13/16, G01H 11/08

(54) **Körperschallmelder für ein Einbruchalarmsystem**
Sound transducer for burglar alarm system
Transducteur sonique pour détecter une effraction

(30) Priorität: 20.01.1994 CH 17294
(43) Veröffentlichungstag der Anmeldung: 26.07.1995
(73) Patentinhaber: Siemens Building Technologies AG, 8708 Männedorf (CH)
(72) Erfinder: Wegmann, George, Dr., CH-9642 Ebnat-Kappel (CH); Studach, Cornel, CH-8634 Hombrechtikon (CH); Märki, Peter, CH-8712 Stäfa (CH); Steiner, Peter, CH-8645 Jona (CH); Ryser, Peter, Dr., CH-8712 Stäfa (CH)

(56) Entgegenhaltungen:
- WO-A-89/00294
- DE-A- 3 006 312
- GB-A- 2 026 284
- US-A- 4 290 058
- US-A- 4 316 440

## Beschreibung

Die vorliegende Erfindung betrifft einen Körperschallmelder für ein Einbruchalarmsystem, mit einem an eine Auswerteelektronik angeschlossenen Körperschallmikrofon, welches einen piezoelektrischen Sensor für Körperschallschwingungen und zu deren Umwandlung in elektrische Signale aufweist.

Diese auch als Geräuschmelder bezeichneten Körperschallmelder dienen zur Detektion von Angriffen auf Schutzobjekte aus Stahl oder Beton und auf Panzerschränke mit kunststoffverstärkten Schutzbeschichtungen. Die Melder werden insbesondere zur Überwachung von Tresormauern und -türen, Panzerschränken und Geldausgabeautomaten eingesetzt. Ihre Funktionsweise beruht darauf, dass bei der Bearbeitung von harten Werkstoffen, wie beispielsweise Beton oder Metall, Massenbeschleunigungen entstehen, wodurch mechanische Schwingungen erzeugt werden, die sich im Material als Körperschall ausbreiten. Der piezoelektrische Sensor nimmt diese Schwingungen auf und wandelt sie in elektrische Signale um. Die Melderelektronik analysiert die Signale und löst bei entsprechendem Ergebnis der Analyse einen Alarm aus.

Bei allen heute bekannten Körperschallmeldern ist der Sensor durch ein piezoelektrisches Scheibchen gebildet, das mit seinem Träger verklebt ist. Eine solche Anordnung ist z.B. aus WO-A-89/00294 bekannt. Dadurch ist die Empfindlichkeit des Mikrofons primär von externen Parametern wie Anpressdruck, Dicke und Qualität der Klebschicht, von den umliegenden mechanischen Teilen und dergleichen beeinflusst. Und das hat zur Folge, dass jeder einzelne Melder abgeglichen werden muss, wodurch die Produktionskosten nicht unwesentlich verteuert werden.

Eine zweite Folge der Abhängigkeit des Mikrofons von externen Parametern besteht darin, dass die Transferfunktion des Mikrofons, also die Aufnahme und Übertragung des Körperschalls durch dieses, nicht kontrollier- oder reproduzierbar ist. Dazu kommt noch, dass die Resonanzfrequenz und die Empfindlichkeit des Körperschallmikrofons sehr wesentlich von dem Teil des Sensorgehäuses bildenden Metallflansch beeinflusst werden.

Durch die Erfindung sollen nun die bekannten Körperschallmelder so verbessert werden, dass die Empfindlichkeit des Mikrofons primär nur noch von der Sensorcharakteristik und nicht mehr von externen Parametern abhängig und damit kein Trimmen oder Abgleichen mehr erforderlich ist. Ausserdem soll die Transferfunktion des Mikrofons reproduzier- und kontrollierbar sein.

Die gestellte Aufgabe wird erfindungsgemäss dadurch gelöst, dass der piezoelektrische Sensor einen definierten, an einem seiner Enden mit einem Teil seiner Fläche am unteren Teil mittels Hybridtechnik auf einem leitenden Träger befestigten, Schwingbalken enthält, der durch ein Bimorph-Element gebildet ist.

Der erfindungsgemässe Sensor hat den Hauptvorteil, dass die Resonanzfrequenz des Schwingbalkens praktisch ausschliesslich von dessen Dimensionen und nur noch sehr wenig von dem das Mikrofon tragenden Flansch abhängig ist. Dadurch sind die Empfindlichkeit und die Resonanzfrequenz des Mikrofons ausschliesslich von der Sensorcharakteristik und nicht mehr von externen Parametern anhängig, wodurch kein Abgleich mehr nötig ist und die Produktion entsprechend vereinfacht und verbilligt wird.

Bimorph-Elemente bestehen laut Komponentenkatalog der Firma Philips aus zwei dünnen, zu einer Einheit zusammengefügten PXE-Plättchen, wobei PXE ein piezokeramisches Material bezeichnet. Die Ausbildung des Schwingbalkens durch ein Bimorph-Element hat den Vorteil, dass zwischen dem Bimorph-Element und dem leitenden Träger eine genau reproduzierbare Verbindung geschaffen wird, wodurch die Herstellungskosten des Sensors weiter gesenkt werden.

Der leitende Träger seinerseits ist auf einer Basis, vorzugsweise auf einem Transistorsockel, befestigt, so dass zwischen diesem und dem unteren Teil des Bimorph-Elements eine galvanische Verbindung besteht.

Ein Vibrationsdetektor mit einem aus einem Bimorph-Element gebildeten Schwingbalken der in einem Träger befestigt ist, ist z.B. aus US-A-4 316 440 bekannt.

Im folgenden wird die Erfindung anhand eines Ausführungsbeispiels und der Zeichnungen näher erläutert; es zeigt:
Fig. 1 ein Blockschema eines Körperschallmelders,
Fig. 2 einen Schnitt durch den das Mikrofon enthaltenden Teil des Melders,
Fig. 3 ein Detail des Mikrofons von Fig. 2; und
Fig. 4 einen Schnitt nach der Linie IV-IV von Fig. 3.

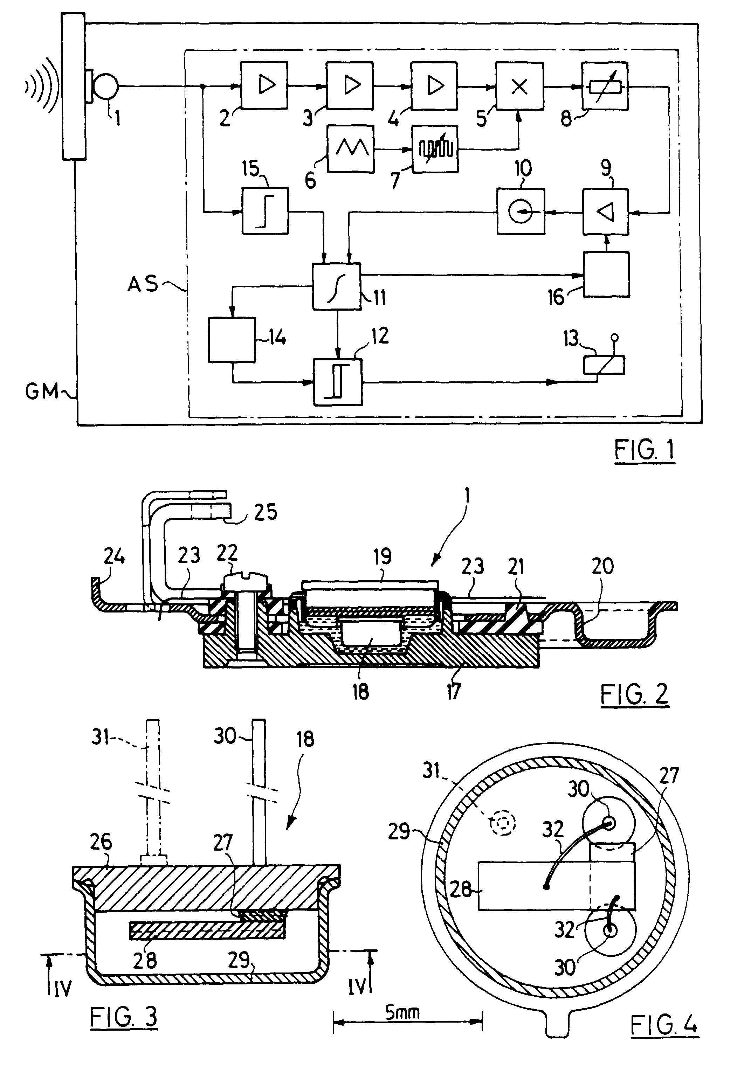

Der in Fig. 1 dargestellte Geräuschmelder GM enthält darstellungsgemäss ein als Körperschallaufnehmer wirkendes Mikrofon 1 und eine Auswerteschaltung AS. Das Mikrofon 1 dient zur Aufnahme der Schwingungen, die von den bei der Bearbeitung von harten Werkstoffen entstehenden Massenbeschleunigungen erzeugt werden, und zur Umwandlung dieser Schwingungen in elektrische Signale. Die Auswerteschaltung ist beispielsweise aus der US-A 4,290,058 bekannt und soll hier nur kurz beschrieben werden.

Das Ausgangssignal des Mikrofons 1 wird über einen Impedanzwandler 2 einem Vorverstärker 3 zugeführt. Das vorverstärkte Signal gelangt über einen weiteren Verstärker 4 zu einem Mischer 5, wo das verstärkte Signal mit dem Signal eines von einem langsam laufenden Sweeposzillator 6 gewobbelten Oszillators 7 gemischt wird. Das Signalmischprodukt wird über einen Empfindlichkeitsregler 8 einem Zwischenfrequenzverstärker 9 zugeführt. Das verstärkte ZF-Signal wirkt auf eine spannungsgesteuerte Stromquelle 10, die einen Integrationskondensator 11 auflädt. Sobald die Spannung am Integrationskondensator 11 die Schwelle eines Alarmkomparators 12 überschreitet, wird durch das Abfallen eines Alarmrelais 13 Alarm ausgelöst.

Der Alarmkomparator ist als Schmitt-Trigger beschaltet. Dabei sind die Schaltschwellen so gewählt, dass bei Alarm durch das Entladen des Integrationskondensators 11 über das Entladenetzwerk 14 die Alarmselbsthaltezeit circa 1s beträgt. Bei starken Schlägen oder bei einer Sprengung wird eine Kippstufe 15 ausgelöst, die in kurzer Zeit den Integrationskondensator 11 auflädt und eine Alarmauslösung bewirkt. Wenn der Zeitabstand zwischen zwei aufeineinanderfolgenden Geräuschen grösser als circa 5s ist, dann wird der Integrationskondensator 11 durch eine Stufe 16 schnell entladen.

Fig. 2 zeigt einen Axialschnitt durch das Mikrofon 1 des Geräuschmelders GM von Figur 1. Dieses besteht darstellungsgemäss aus einem Mikrofonflansch 17, der auf dem zu schützenden Objekt angeschraubt wird, und zwar so, dass er mit seiner in der Figur unteren Fläche auf dem Objekt anliegt. In den Mikrofonflansch 17 ist ein Sensor 18 eingegossen oder eingeklebt. Der Sensor 18 ist nach oben durch einen ebenfalls mit dem Mikrofonflansch 17 verklebten Deckel 19 abgeschlossen, der einen Anschlusskontakt zur Auswertelektronik AS (Fig. 1) aufweist. Auf den Mikrofonflansch 17 ist ein Montageblech 20 gelegt, das vom Mikrofonflansch durch Gummieinlagen 21 abgefedert ist. Das Montageblech 20 ist mittels Schrauben 22 mit dem Mikrofonflansch verbunden; eine Blechscheibe 23, die auf dem Montageblech 20 liegt und von den Schrauben 22 durchsetzt ist, verhindert ein Herausfallen des Mikrofonflansches 17 aus dem Montageblech 20.

Das Montageblech 20 ist mit einem Befestigungssteg 24 für die Auswertelektronik versehen, die in einem aufklappbaren Kunststoffdeckel gehalten ist. Ausserdem weist das Montageblech 20 Befestigungsbügel 25 für einen massiven Gehäusedeckel auf, der mit einem Sabotageschalter gegen unbefugte Eingriffe gesichert ist. Der Kunststoffdeckel für die Auswerteelektronik, der Gehäusedeckel und der Sabotageschalter sind nicht wesentlich für die Erfindung und sind daher nicht dargestellt.

Der Sensor 18 des Mikrofons 1 ist in den Figuren 3 und 4 dargestellt, wobei Fig. 3 einen Axialschnitt und Fig. 4 einen Querschnitt nach der Linie IV-IV von Fig. 3 zeigt. Der Sensor 18 besteht darstellungsgemäss aus einem Transistorsockel 26, einem auf diesem befestigten leitenden Trägerplättchen 27, einem auf dem letzteren befestigten piezoelektrischen Schwingbalken 28, einer Abdeckkappe 29 und drei Anschlüssen 30 und 31, von denen die beiden Anschlüsse 30 zum Anschlusskontakt im Deckel 19 (Fig. 2) geführt sind und der strichpunktiert eingezeichnete Anschluss 31 zur Erdung dient.

Das Trägerplättchen 27 dient dazu, zwischen dem Schwingbalken 28 und dem Transistorsockel 26 einen Abstand herzustellen, damit der Schwingbalken 28 frei schwingen kann. Ausserdem bildet das Trägerplättchen 27 eine galvanische Verbindung zwischen dem unteren Teil des Schwingbalkens 28 und dem Transistorsockel 26. Als Material für das Trägerplättchen 27 wird vorzugsweise Keramik verwendet; das Trägerplättchen kann aber auch durch einen Metallsockel gebildet sein.

Der Schwingbalken 28 ist durch ein sogenanntes Bimorph-Element gebildet, das sind gemäss Piezokeramik-Komponentenkatalog der Firma Philips zwei dünne, zu einer Einheit zusammengefügte PXE-Plättchen. Bimorph-Elemente werden seriell oder parallel betrieben, wobei für Sensor-Anwendungen ein serieller Betrieb der PXE-Plättchen empfohlen wird.

Der Schwingbalken 28, der eine Gesamtlänge von 5.3mm und einen Querschnitt von 1.5 mal 0.5mm² hat, und dessen Resonanzfrequenz im Bereich von etwa 12 bis 22 kHz liegt, ist ebenso wie das Trägerplättchen 27 vergoldet. Der Schwingbalken 28 ist in Hybridtechnik auf das Trägerplättchen 27 gebondet. Unter Hybridtechnik versteht man bekanntlich eine Schaltungsintegration, bei der die Halbleiterplättchen eingeklebt, eingelötet oder drahtgebondet werden. Bonden wiederum bezeichnet die Herstellung elektrischer Verbindungen innerhalb von Halbleiterbauelementen durch dünne Golddrähte.

Diese dünnen Drähte, die die Verbindung zwischen dem Schwingbalken 28 und den beiden Kontakten 30 herstellen, sind in Fig. 4 mit dem Bezugszeichen 32 bezeichnet. Sie bestehen aus Gold und haben einen Durchmesser von 25 µm. Darstellungsgemäss sind zwei Bonds 32 auf derselben Seite des Schwingbalkens 28 vorgesehen, was erlaubt, einen Bruch des Schwingbalkens 28 infolge von Sprengung oder hartem Schlag festzustellen.

Wenn das Trägerplättchen 27 durch ein Keramikplättchen gebildet ist, dann sind sowohl der Transistorsockel 26 und dieses Keramikplättchen, als auch das Keramikplättchen und der Schwingbalken 28 mit elektrisch leitendem Epoxid verklebt, damit der untere Teil des Schwingbalkens 28 mit dem Transistorsockel 26 elektrisch verbunden ist. Vom Mikrofon 1 empfangener Körperschall wird vom Transistorsockel 26 auf den akustisch hart gekoppelten Schwingbalken 28 übertragen und regt diesen an. Das am Ausgang des Sensors 18 erhältliche elektrische Signal gibt Auskunft über die Art und Intensität dieser Anregung.

Der erfindungsgemässe Körperschallmelder ist nicht auf das beschriebene Ausführungsbeispiel, insbesondere nicht auf die in Fig. 1 dargestellte Auswerteelektronik AS und auch nicht auf das in Fig. 2 dargestellte Mikrofon 1, beschränkt. Wesentlich für die Erfindung sind zwei Merkmale des piezoelektrischen Sensors: Einmal die Verwendung eines präzise definierten Sensors in Form eines Schwingbalkens, und dessen Herstellung und Montage in Hybridtechnik, und dann die Verwendung eines Bimorph-Elements als Schwingbalken.

## Patentansprüche

1. Körperschallmelder für ein Einbruchalarmsystem, mit einem an eine Auswerteelektronik (AS) angeschlossenen Körperschallmikrofon (1), welches einen piezoelektrischen Sensor (18) für Körperschallschwingungen und zu deren Umwandlung in elektrische Signale aufweist, dadurch gekennzeichnet, dass der piezoelektrische Sensor einen definierten, an einem seiner Enden mit einem Teil seiner Fläche am unteren Teil, mittels Hybridtechnik auf einem leitenden Träger (27) befestigten, Schwingbalken (28) enthält, der durch ein Bimorph-Element gebildet ist.

2. Körperschallmelder nach Anspruch 1, dadurch gekennzeichnet, dass der Träger (27) durch einen Metallsockel gebildet ist.

3. Körperschallmelder nach Anspruch 1, dadurch gekennzeichnet, dass der Träger (27) durch ein Keramikplättchen gebildet ist.

4. Körperschallmelder nach Anspruch 3, dadurch gekennzeichnet, dass der Schwingbalken (28) und das Keramikplättchen vergoldet sind, und dass direkt auf den Schwingbalken gebondet ist.

5. Körperschallmelder nach Anspruch 4, dadurch gekennzeichnet, dass das Keramikplättchen von einem Transistorsockel (26) getragen und mit leitendem Epoxid auf diesen geklebt ist.

6. Körperschallmelder nach Anspruch 4, dadurch gekennzeichnet, dass auf derselben Seite des Schwingbalkens (28) zwei Bonds (32) vorgesehen sind.

7. Körperschallmelder nach einem der Ansprüche 1 bis 6, dadurch gekennzeichnet, dass der Schwingbalken (28) eine Länge von 1 bis 7mm, vorzugsweise von etwa 5mm, und einen Querschnitt von weniger als 1mm² aufweist.

## Claims

1. Structure-borne sound detector for an intruder alarm system, with a structure-borne sound microphone (1), which has a piezoelectric sensor (18) for structure-borne sound vibrations and for converting these into electrical signals, connected to an electronic evaluation unit (AS), characterized in that the piezoelectric sensor contains a defined vibrating bar (28), which is formed by a bimorph element and attached at one of its ends with a part of its surface on the bottom part by means of hybrid technology to a conductive carrier (27).

2. Structure-borne sound detector according to claim 1, characterized in that the carrier (27) is formed by a metal base.

3. Structure-borne sound detector according to claim 1, characterized in that the carrier (27) is formed by a ceramic wafer.

4. Structure-borne sound detector according to claim 3, characterized in that the vibrating bar (28) and the ceramic wafer are gold-plated, and that bonding is performed directly onto the vibrating bar.

5. Structure-borne sound detector according to claim 4, characterized in that the ceramic wafer is supported by a transistor header (26) and is glued to this using conductive epoxy resin.

6. Structure-borne sound detector according to claim 4, characterized in that two bonds (32) are provided on the same side of the vibrating bar (28).

7. Structure-borne sound detector according to any one of claims 1 to 6, characterized in that the vibrating bar (28) is 1 to 7 mm in length, preferably around 5 mm, and has a cross-section of less than 1 mm².

## Revendications

1. Transducteur sonique pour un système d'alerte en cas d'effraction, comprenant un microphone (1) qui est raccordé à une électronique (AS) d'exploitation, et qui comporte un capteur (18) piézo-électrique de vibrations acoustiques permettant de les transformer en signaux électriques, caractérisé en ce que le capteur piézo-électrique comporte une poutrelle (28) oscillante définie, fixée à l'une de ses extrémités, par une partie de sa surface, à la partie inférieure au moyen d'une technique hybride, sur un support (27) conducteur et formée d'un élément bimorphe.

2. Transducteur sonique suivant la revendication 1, caractérisé en ce que le support (27) est formé par une semelle métallique.

3. Transducteur sonique suivant la revendication 1, caractérisé en ce que le support (27) est formé par une plaquette en céramique.

4. Transducteur sonique suivant la revendication 3, caractérisé en ce la poutrelle (28) oscillante et la plaquette de céramique sont revêtues d'or, et en ce que la plaquette est liée directement à la poutrelle oscillante.

5. Transducteur sonique suivant la revendication 4, caractérisé en ce que la plaquette en céramique est portée par un socle (26) de transistor, et y est collée par un époxyde conducteur.

6. Transducteur sonique suivant la revendication 4, caractérisé en ce qu'il est prévu sur la même face de la poutrelle (28) oscillante deux liaisons (32).

7. Transducteur sonique suivant l'une des revendications 1 à 6, caractérisé en ce que la poutrelle (28) oscillante a une longueur de 1 à 7 mm, de préférence de 5 mm environ, et une section transversale inférieure à 1 mm².
